# EUROPÄISCHE PATENTANMELDUNG

(11) **EP 0 926 160 A1**
(43) Veröffentlichungstag der Anmeldung: **30.06.1999**
(21) Anmeldenummer: 98124347.0
(22) Anmeldetag: 21.12.1998
(51) Int. Cl.: C08C 1/065, C08J 9/30

(54) **Verfahren zur Herstellung von Polymerdispersionsschäumen**

(30) Priorität: 23.12.1997 DE 19757700
(71) Anmelder: BASF AKTIENGESELLSCHAFT, 67056 Ludwigshafen (DE)
(72) Erfinder: Balk, Roelof, 67459 Böhl-Iggelheim (DE); Graalmann, Onno, 69221 Dossenheim (DE); Kolman, Frank, 6922 Duiven (NL)
(74) Vertreter: Kinzebach, Werner, Dr.

(57) **Zusammenfassung**

Die vorliegende Erfindung betrifft ein Verfahren zur Herstellung von Polymerdispersionsschäumen L, wobei man:
a) eine Mischung M, die mindestens ein konjugiertes Dienmonomer A und mindestens ein ethylenisch ungesättigtes Comonomer B umfasst, durch radikalische wässrige Emulsionspolymerisation in Gegenwart wenigstens eines Emulgators zu einer feinteiligen Polymerdispersion P polymerisiert,
b) die feinteilige Polymerdispersion P zu einer grobteiligen Polymerdispersion G druckagglomeriert,
c) die Polymerdispersion G gegebenenfalls aufkonzentriert und gegebenenfalls mit einer Verstärkerdispersion H mischt,
d) die Dispersion aus c) zu einem Polymerdispersionsschaum L schäumt,
das dadurch gekennzeichnet ist, dass die mittlere Teilchengröße und die Teilchengrößenverteilung von G durch Variation eines Parameters, ausgewählt unter:
I) dem Feststoffgehalt von P,
II) der Agglomerationstemperatur in Schritt b),
III) dem Agglomerationsdruck in Schritt b),
IV) dem Gehalt an Comonomer B in der Mischung M,
V) der Konzentration des Emulgators in P,
VI) dem Durchsatz bei der Agglomeration,
eingestellt wird, nach diesem Verfahren erhältliche Polymerdispersionsschäume und deren Verwendung.

## Beschreibung

Die vorliegende Erfindung betrifft ein Verfahren zur Herstellung von Polymerdispersionsschäumen, wobei man eine durch radikalische wässrige Emulsionspolymerisation erhältliche, feinteilige Polymerdispersion druckagglomeriert, anschließend gegebenenfalls aufkonzentriert und gegebenenfalls mit einer Verstärkerdispersion mischt und zu einem Polymerdispersionsschaum schäumt. Die Erfindung betrifft auch die dadurch erhältlichen agglomerierten Polymerdispersionen sowie die Polymerdispersionsschäume und deren Verwendung.

Polymerdispersionsschäume haben aufgrund ihrer speziellen Produkteigenschaften, wie z. B. einer guten Elastizität und einer langen Lebensdauer, breite Anwendung gefunden, insbesondere als Formschäume für Polstermaterialien in der Möbel- und Autoindustrie sowie als Teppichschäume für die Beschichtung von Teppichrücken. Zur Herstellung solcher Polymerdispersionsschäume wird im Allgemeinen eine wässrige Polymerisatdispersion auf Basis eines Dienmonomers und insbesondere auf Basis von Butadien verwendet. Dabei müssen diese Dispersionen zur Herstellung stabiler Schäume mit guten Produkteigenschaften einen hohen Feststoffgehalt bei vergleichsweise niedriger Viskosität aufweisen. Um dies zu erreichen, muss ein Teil der Polymerdispersionsteilchen in solchen Dispersionen relativ groß und die Grössenverteilungen relativ breit sein. Da Dienmonomere, wie Butadien, jedoch wenig reaktiv sind und nur langsam polymerisieren, lassen sich hochkonzentrierte, wässrige Butadien-Dispersionen mit einem Feststoffgehalt von mindestens 60 Gew.-% nicht wirtschaftlich durch direkte Emulsionspolymerisation herstellen. Daher werden im Allgemeinen zuerst feinteilige Polymerisatdispersionen mit einem relativ geringen Feststoffanteil und einer Teilchengröße im Bereich von ca. 50 bis 100 nm hergestellt und anschließend durch Agglomeration in grobteilige Dispersionen mit einer breiten Teilchengrößenverteilung überführt. Diese können dann durch Entfernen von Wasser aufkonzentriert und gegebenenfalls zusätzlich noch mit einer harten Verstärkerdispersion gemischt werden.

Bekannte Verfahren zur Agglomeration von Polymerisatdispersionen umfassen Druck-, Gefrier- und chemische Agglomeration. Bei der Gefrieragglomeration werden die Dispersionen in Schichten gefroren, wobei eine partielle kolloidale Instabilität erzeugt wird, die zu einer Zusammenlagerung der Polymerdispersionspartikel führt, und anschließend wieder aufgetaut. Dieses Verfahren ist jedoch technisch sehr aufwendig und mit hohen Energiekosten verbunden.

Bei der chemischen Agglomeration wird den feinteiligen Polymerisatdispersionen ein Agglomerationsmittel, z. B. ein Polyalkylenoxid, zugesetzt, um einen kontrollierten Agglomerationsprozess einzuleiten. Die EP-A-661296 beschreibt ein Verfahren zur Herstellung wässriger, hochkonzentrierter Synthesekautschukdispersionen durch chemische Agglomeration feinteiliger Ausgangsdispersionen mit Hilfe von wasserlöslichen oder wasserdispergierbaren Copolymeren, die hydrophobe, wasserunlösliche, olefinisch ungesättigte Monomere und hydrophile, wasserlösliche und salzbildende, olefinisch ungesättigte Monomere umfassen. Nachteilig an diesem Verfahren ist, dass u. U. zuerst das Agglomerationsmittel hergestellt werden muss und dass dieses anschließend zusammen mit einer Elektrolytlösung der Polymerisatdispersion unter ständiger genauer Kontrolle der Oberflächenspannung und/oder des pH-Wertes zugegeben werden muss.

B.D. Jones berichtet in "New Method for the Production of Improved SBR High Solids Latices" anläßlich der Fourth Rubber Technology Conference, London, 1962, über neue Verfahren zur Herstellung synthetischer Polymerdispersionen mit hohem Feststoffgehalt und speziell ein Verfahren zur Agglomeration von SBR-Polymerdispersion, wobei Polymerdispersionen mit einem verbesserten Verhältnis von Feststoffgehalt zu Viskosität erhalten werden. Dabei wird die Synthesekautschukdispersion in einem Homogenisator in Gegenwart von Emulgatoren und bei pH-Werten bis 13 druckagglomeriert. Durch geeignete Wahl der Verfahrensparameter, wie pH der Polymerdispersion, Feststoffgehalt der zu agglomerierenden Polymerdispersion, Polymerdispersionstemperatur, Homogenisierungsdruck und dem Verhältnis von Seife (Emulgator) zu Kautschuk, können Synthesekautschukdispersionen bis zu 76 % Feststoffgehalt und einer Viskosität von 2000 mPa·s erhalten werden. Dabei tritt nur im geringen Ausmaß Koagulatbildung auf. Die Publikation beschreibt nur allgemein den Einfluss verschiedener Verfahrensparameter auf ein Druckagglomerationsverfahren. Die Regelung der mittleren Teilchengröße und der Teilchengrößenverteilung, also der Teilchenmorphologie der agglomerierten Polymerdispersionen, durch Variation eines einzigen Parameters bei der Agglomeration wird nicht beschrieben. Ebenso wird der Einfluss der Teilchenmorphologie auf das Endprodukt Polymerdispersionsschaum nicht beschrieben.

Die GB-A-976212 beschreibt ein Verfahren zur Verringerung der Viskosität und/oder Vergrößerung der Teilchengröße bei einer durch Emulsionspolymerisation erhaltenen Synthesekautschukdispersion, wobei man die Polymerdispersion bei erhöhtem Druck durch eine Drossel fließen lässt.

Die DE-A-2101650 beschreibt Kautschukdispersionen, die durch Agglomerieren einer Ausgangsdispersion mit einer durchschnittlichen Teilchengröße von unter 0,15 µm, wobei nicht mehr als 30 % der Teilchen einen Durchmesser von weniger als 0,10 µm haben, erhältlich sind, ein Verfahren zu deren Herstellung sowie deren Verwendung. Das zugrunde liegende Herstellungsverfahren ist dabei technisch sehr aufwendig, da ein Teil der Teilchen der Ausgangskautschukdispersion mit einem Teilchendurchmesser von weniger als 0,1 µm vor der Agglomeration durch Zentrifugieren und Aufrahmen entfernt werden muss.

Nachteilig an den zuvor beschriebenen Verfahren ist, dass die Verfahrenssteuerung zur Erzielung eines bestimmten Qualitätsprofils in der Polymerdispersion als Endprodukt sehr aufwendig ist. Insbesondere müssen dabei auch beim Einsatz von nur einer bestimmten feinteiligen Ausgangsdispersion immer mehrere Verfahrensparameter bei der Agglomerierung aufeinander abgestimmt werden, wenn aus dieser einen Dispersion verschiedene Schäume mit unterschiedlichen Produkteigenschaften hergestellt werden sollen. Dies bedingt oftmals ein langwieriges Austesten der geeigneten Reaktionsbedingungen bei einem Produktwechsel, welches material- und zeitintensiv ist und sich ungünstig auf die Wirtschaftlichkeit des Verfahrens auswirkt.

Der vorliegenden Erfindung liegt die Aufgabe zugrunde, ein Verfahren zur Herstellung von Polymerdispersionsschäumen zur Verfügung zu stellen, wobei eine feinteilige Ausgangspolymerdispersion zu einer grobteiligen Polymerdispersion unter Druck agglomeriert und diese anschließend geschäumt wird und die zuvor beschriebenen Nachteile bei der Einstellung der Verfahrensparameter der Druckagglomeration vermieden werden. Dabei soll das Verfahren eine möglichst einfache und wirtschaftliche Herstellung von grobteiligen Polymerdispersionen mit unterschiedlichen Produkteigenschaften für die Weiterverarbeitung zu Polymerdispersionsschäumen mit verschiedenen Qualitätsprofilen ermöglichen.

Überraschenderweise wurde nun gefunden, dass die Aufgabe gelöst wird, wenn man in Abhängigkeit von den gewünschten Produkteigenschaften des Polymerdispersionsschaums jeweils einen von drei bestimmten Parametern bei der Agglomerierung der feinteiligen Ausgangsdispersionen variiert. Weiterhin wurde gefunden, dass diese Parameter einen Einfluss auf die Teilchengrößenverteilung der grobteiligen, agglomerierten Polymerisatdispersion haben, und dass diese wiederum die Morphologie des Polymerdispersionsschaums als Endprodukt und somit dessen Produkteigenschaften, wie z. B. die Härte- und Reißeigenschaften, wesentlich beeinflusst.

Gegenstand der Erfindung ist daher ein Verfahren zur Herstellung von Polymerdispersionsschäumen L, wobei man:
a) eine Mischung M, die mindestens ein konjugiertes Dienmonomer A und mindestens ein ethylenisch ungesättigtes Comonomer B umfasst, durch radikalische wässrige Emulsionspolymerisation in Gegenwart wenigstens eines Emulgators zu einer feinteiligen Polymerdispersion P polymerisiert,
b) die feinteilige Polymerdispersion P zu einer grobteiligen Polymerdispersion G druckagglomeriert,
c) die Polymerdispersion G gegebenenfalls aufkonzentriert und gegebenenfalls mit einer Verstärkerdispersion H mischt,
d) die Dispersion aus c) zu einem Polymerdispersionsschaum L schäumt,
das dadurch gekennzeichnet ist, dass die mittlere Teilchengröße und die Teilchengrößenverteilung von G durch Variation eines Parameters, ausgewählt unter:
I) dem Feststoffgehalt von P,
II) der Agglomerationstemperatur in Schritt b),
III) dem Agglomerationsdruck in Schritt b),
IV) dem Gehalt an Comonomer B in der Mischung M,
V) der Konzentration des Emulgators in P,
VI) dem Durchsatz bei der Agglomeration,
eingestellt wird.

### Schritt a)

Die Herstellung der feinteiligen Polymerdispersionen P erfolgt durch radikalische wässrige Emulsionspolymerisation nach üblichen Verfahren einschließlich Zulaufverfahren, semikontinuierlichen Zulaufverfahren und Batch-Verfahren. Bevorzugt ist die semikontinuierliche Fahrweise, wobei die Monomere in reiner oder voremulgierter Form zusammen mit dem Polymerisationsmedium und mindestens einem Emulgator in einem Reaktor vorgelegt werden und vorzugsweise ohne vorherige Bildung eines Saatlatex unter Zugabe eines Initiators polymerisiert werden. Der Initiator kann dabei auch teilweise vorgelegt oder vollständig über einen Zulauf nach Maßgabe seines Verbrauchs zur Aufrechterhaltung der Polymerisation dem Polymerisationsreaktor zugeführt werden.

Das Polymerisationsmedium kann sowohl nur aus Wasser als auch aus Mischungen aus Wasser und wassermischbaren Flüssigkeiten, wie z. B. Methanol, bestehen. Vorzugsweise wird nur Wasser verwendet.

Die radikalische wässrige Emulsionspolymerisation kann bei Normaldruck, unter erhöhtem oder reduziertem Druck erfolgen. Insbesondere bei der Verwendung von gasförmigen Monomeren, wie z. B. Butadien, kann die Polymerisation unter erhöhtem Druck erfolgen.

Die Polymerisationstemperatur beträgt in der Regel 0 bis 100 °C. Höhere Polymerisationstemperaturen, z. B. bis 130 °C, sind möglich. Vorzugsweise liegt die Polymerisationstemperatur nach dem erfindungsgemäßen Verfahren jedoch bei geringeren Werten von etwa 0 bis 50 °C, bevorzugt etwa 0 bis 30 °C.

Zur Herstellung der feinteiligen Polymerisatdispersionen P werden dem Polymerisationsansatz Emulgatoren und/oder Schutzkolloide in einer Menge von 0,05 bis 15 Gew.-%, bevorzugt 1 bis 10 Gew.-%, bezogen auf die Monomermenge, zugesetzt.

Geeignete Emulgatoren sind die dem Fachmann bekannten, üblicherweise bei der wässrigen Emulsionspolymerisation als Dispergiermittel eingesetzten Emulgatoren, wie sie z. B. in Houben-Weyl, Methoden der organischen Chemie, Band XIV/1, Makromolekulare Stoffe, Georg-Thieme-Verlag, Stuttgart, 1961, S. 411 - 420, beschrieben sind. Es sind sowohl anionische, kationische als auch nichtionische Emulgatoren geeignet. Vorzugsweise werden anionische Emulgatoren und insbesondere Seifen eingesetzt.

Geeignete anionische Emulgatoren sind die Salze von C₈-C₁₈-Fettsäuren mit Alkalimetallen, wie Na und K, mit Ammonium, flüchtigen Aminen, wie Triethylamin, Ethanolamin, Diethanolamin, Triethanolamin, Morpholin etc. und mit zwei- und dreiwertigen Kationen, wie z. B. Calcium, Magnesium, Aluminium, etc. Weitere geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208. Als anionische Emulgatoren sind ebenfalls Bis(phenoylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Bevorzugte Emulgatoren für das erfindungsgemäße Verfahren sind die Natron- oder Kaliseifen der Palmitinsäure, Margarinsäure, Stearinsäure, Palmitoleinsäure und Ölsäure und die Harzseifen (Resinate), wie z. B. die Natrium- oder Kaliumsalze der Ricinolsäure, Abietinsäure, Pimarsäure etc.

Die eingesetzten Emulgatoren müssen mit apolaren Teilchen kompatibel sein und schnell desorbieren können. Da auch das Mengenverhältnis von Seife zu Polymer die Eigenschaften des Endproduktes gegebenenfalls beeinflussen kann, soll die Oberflächenspannung der polymerisierten feinteiligen Dispersionen P im Allgemeinen höchstens 70 mN/m betragen. Um eine ausreichende Bedeckung der Teilchen zu erreichen, liegt die Einsatzmenge von Seifen als Emulgatoren im Allgemeinen bei etwa 1 bis 10 Gew.-%, bezogen auf die Menge an zu polymerisierenden Monomeren.

Gegebenenfalls kann die Monomermischung in Gegenwart von Elektrolyten, wie Alkalichloriden und -sulfaten, z. B. KCl und Na₂SO₄, polymerisiert werden. Durch diesen Elektrolytzusatz wird eine Präagglomeration der Polymerdispersionsteilchen erzielt, so dass die Viskosität der Polymerisatdispersionen P nicht zu stark ansteigt.

Geeignete Schutzkolloide sind die üblichen bei den vorzugsweise alkalischen pH-Werten der erfindungsgemäßen Dispersionen stabilen Schutzkolloide. Eine ausführliche Beschreibung von Schutzkolloiden findet sich in Houben-Weyl, Methoden der organischen Chemie, Band XIV/1, Makromolekulare Stoffe, Georg-Thieme-Verlag, Stuttgart, S. 411 - 420. Geeignete Schutzkolloide zur Herstellung von Polymerisatdispersionen P sind Phenol- und NaphthalinsulfonsäureFormaldehyd-Kondensate, wie z. B. die Tamol®-Marken der BASF AG. Die eingesetzte Menge beträgt im Allgemeinen etwa 0,1 bis 2 Gew.-%, bezogen auf die Gesamtmenge der zu polymerisierenden Monomere.

Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Ebenfalls als Initiatoren geeignete organische Peroxide sind in der EP-A-0 536 597 beschrieben. Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Vorzugsweise werden Initiatoren eingesetzt, die eine Initiierung der Polymerisation auch bei geringen Temperaturen, wie ca. 0 bis 50 °C, bevorzugt ca. 10 bis 30 °C, ermöglichen. Für Polymerisationen, vor allem bei tiefen Temperaturen, werden bevorzugt Redoxinitiatoren verwendet, die wenigsten ein Reduktionsmittel und ein Oxidationsmittel umfassen. Geeignete Oxidationsmittel sind dabei die zuvor genannten Peroxide und/oder Hydroperoxide. Bevorzugt sind kombinierte Systeme, die zusätzlich eine geringe Menge einer im Polymerisationsmedium löslichen Metallverbindung enthalten können, die in mehreren Wertigkeitsstufen auftreten kann. Geeignete Redoxinitiatorsysteme für das erfindungsgemäße Verfahren umfassen als reduzierende Komponente z. B. Ascorbinsäure, Glukose, Sorbose, Ammonium- oder Alkalimetall-hydrogensulfit, -sulfit, -thiosulfat, -hyposulfit, -pyrosulfit oder -sulfid, Salze der Hydroxymethansulfinsäure, bevorzugt das Natriumsalz, erhältlich als Rongalit® der BASF AG, Acetonbisulfitaddukte etc.

Geeignete oxidierende Komponenten sind Wasserstoffperoxide, t.-Butylhydroperoxid, Diisopropylhydroperoxid, Ammonium- und/oder Alkalimetallperoxodisulfate etc. Geeignete metallische Komponenten sind wasserlösliche Fe(II)-Salze, z. B. Fe(II)sulfat, Silbersalze, Kombinationen aus wasserlöslichen Fe/V-Salzen etc.

Bevorzugte Redoxinitiatoren sind:
- Diisopropylhydroperoxid/Acetonbisulfitaddukt,
- Diisopropylhydroperoxid/Hydroxymethansulfinsäure-Natriumsalz,
- Ascorbinsäure/Fe(II)sulfat/Wasserstoffperoxid.

Werden als Initiatorsysteme Redoxinitiatoren eingesetzt, so liegt die Menge der reduzierenden Komponente im Allgemeinen bei etwa 3 x 10⁻⁶ bis 1 Mol.-% und die der oxidierenden Komponente im Allgemeinen bei etwa 0,001 bis 5,0 Mol.-%, bezogen auf die Menge der bei der Polymerisation eingesetzten Monomeren.

Die zur Herstellung der Polymerisatdispersionen P verwendete Monomerenmischung M enthält 45 bis 99 Gew.-%, bevorzugt 50 bis 90 Gew.-%, insbesondere 55 bis 85 Gew.-%, mindestens eines radikalisch polymerisierbaren Dienmonomers A (Hauptmonomer) und 1 bis 55 Gew.-% mindestens eines Comonomers B.

Geeignete Dienmonomere A sind Butadien, Isopren, Chloropren und Mischungen davon.

Insbesondere bevorzugt wird als Dienmonomer A Butadien eingesetzt.

Geeignete ethylenisch ungesättigte Comonomere B sind Vinylaromaten, wie z. B. Styrol, α-Methylstyrol, o-Chlorstyrol oder Vinyltoluol, Ester α,β-monoethylenisch ungesättigter C₃-C₆-Mono- und -Dicarbonsäuren mit Alkanolen mit bevorzugt 1 bis 12 Kohlenstoffatomen, besonders bevorzugt 1 bis 8 Kohlenstoffatomen, wie z. B. Ester der Acrylsäure und/oder Methacrylsäure mit Methanol, Ethanol, n-Propanol, Isopropanol, n-Butanol, Isobutanol und 2-Ethylhexanol, Ester von Vinylalkohol mit Monocarbonsäuren mit 1 bis 20 Kohlenstoffatomen, wie z. B. Vinylformiat, Vinylacetat, Vinylproprionat, Vinyl-n-butyrat, Vinyllaurat und Vinylstearat, α,β-ethylenisch ungesättigte Nitrile, wie z. B. Acrylnitril und Methacrylnitril, 3 bis 6 C-Atome aufweisende α,β-monoethylenisch ungesättigten Mono- und -Dicarbonsäuren und deren Amide, wie z. B. Acrylsäure, Methacrylsäure, Maleinsäure, Fumarsäure, Itaconsäure, Acrylamid und Methacrylamid.

Monomere, die üblicherweise die innere Festigkeit der wässrigen Polymerisatdispersion erhöhen, werden in der Regel nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonylgruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, silanisierte Monomere wie γ-Methacryloxypropylsilan oder Vinyltrimethoxysilan, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat.

Nach einer bevorzugten Ausführungsform des erfindungsgemäßen Verfahrens umfasst die Monomermischung M zur Herstellung der Polymerisatdispersionen P als Dienmonomer A Butadien sowie ein Comonomer B, ausgewählt unter Vinylaromaten, bevorzugt Styrol, (Meth)acrylsäureestern, bevorzugt Methylmethacrylat und Acrylnitril. Die eingesetzte Menge von A beträgt dann 55 bis 90 Gew.-%, vorzugsweise 55 bis 85 Gew.-%, insbesondere 60 bis 80 Gew.-%, bezogen auf die Gesamtmenge der Monomere von M.

Gegebenenfalls kann die Monomermischung M in Gegenwart von üblichen Polymerisationsreglern polymerisiert werden. Diese werden dann in einer Menge von etwa 0,01 bis 5 Gew.-%, bezogen auf die Gesamtmenge der zu polymerisierenden Monomere, eingesetzt.

Geeignete Regler sind Verbindungen, die bei Polymerisationen das Molgewicht der Polymerisate begrenzen, z. B. Alkohole, Salze des Hydrazins und des Hydroxylamins, Ameisensäure, Alkali- und Ammoniumsalze der Ameisensäure, organische Verbindungen, die Schwefel in gebundener Form enthalten, wie organische Sulfide, Disulfide, Polysulfide, Sulfoxide, Sulfone und Mercaptoverbindungen, Ammoniak und Aminoverbindungen oder deren Mischungen. Beispiele für Polymerisationsregler sind: Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid und Dimethylsulfoxid, Ethanolamin, Diethanolamin, Triethanolamin, Triethylamin, Morpholin und Piperidin. Bevorzugt als Polymerisationsregler eingesetzte Verbindungen sind Mercaptoverbindungen, Dialkylsulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Weitere übliche Zusatzstoffe bei der radikalischen wässrigen Emulsionspolymerisation zur Herstellung der Polymerisatdispersionen P sind Sauerstofffänger, wie z. B. Dithionite.

Gegebenenfalls kann dem Polymerisationsansatz ein Kettenabbruchreagens zugesetzt werden, um den maximalen Umsatz zu begrenzen. Im Gegensatz zu den Reglern werden als Kettenabbruchsreagens Verbindungen eingesetzt, deren Radikale so reaktionsträge sind, dass sie im Allgemeinen keine Kettenreaktion mehr starten können. Dazu zählen z. B. Alkylphenole, Amine, wie z. B. Diethylhydroxylamin, Sulfite, Disulfite etc.

Den Polymerdispersionen P können die zuvor genannten und weiterhin übliche Zusatzstoffe in der Vorlage, einem der Zuläufe oder nach Abschluss der Polymerisation zugesetzt werden. So kann gewünschtenfalls der pH-Wert der Dispersion durch Säuren oder vorzugsweise Basen, z. B. Alkalihydroxide, Alkalicarbonate, Alkaliphosphate, Alkaliacetate, Ammoniak etc. eingestellt werden. Weitere geeignete Zusatzstoffe sind z. B. Reduktions- und Bleichmittel, wie z. B. die Alkalimetallsalze der Hydroxymethansulfinsäure (z. B. Rongalit® der BASF AG).

Weitere Zusatzstoffe, die den Polymerisatdispersionen üblicherweise im Anschluss an die Polymerisation zugesetzt werden, sind Stabilisatoren. Geeignete Stabilisatoren sind z. B. Komplexbildner, wie EDTA oder Nitrilotriessigsäure.

Der pH-Wert der Polymerisatdispersionen P liegt vorzugsweise im alkalischen, wie z. B. bei etwa 9 bis 12, speziell bei etwa 10.

Die Polymerisationsdauer beträgt im Allgemeinen etwa 5 bis 20 Stunden.

Beim vorliegenden Verfahren zur Herstellung der Polymerisatdispersionen P wird im Allgemeinen bis zu einem Monomerenumsatz von etwa 60 bis 100 %, bevorzugt etwa 70 bis 90 %, polymerisiert. Der Restmonomerengehalt der Dispersionen kann durch übliche Verfahren, vorzugsweise durch Strippen, z. B. mit Dampf, reduziert werden. Dabei sind Verfahren einzusetzen, die nicht zu einer weiteren Polymerisation oder Vernetzung führen.

Die Teilchengrößenverteilung der nach dem erfindungsgemäßen Verfahren erhaltenen Polymerisatdispersionen P ist im Allgemeinen nahezu monomodal bei einer relativ engen Größenverteilung. Der LD-Wert (Lichtdurchlässigkeit, gemessen gegen Wasser) beträgt im Allgemeinen etwa 70 bis 98 %, bevorzugt 75 bis 98 %, insbesondere 80 bis 95 %.

Das Gewichtsmittel der Teilchengröße, wie es mittels einer analytischen Ultrazentrifuge, entsprechend der Methode von W. Scholtan und H. Lange, Kolloid-Z. und Z. Polymere 250 (1972), S. 782 - 796, bestimmt wird (siehe auch W.P. Mächtle, Angewandte makromolekulare Chemie, 162 (1988), S. 35 - 42), ergibt einen gewichtsmittleren Teilchendurchmesser d₅₀ von 30 bis 120 nm, bevorzugt 40 bis 100 nm. Der d₉₀-Wert beträgt etwa 70 bis 200 nm, bevorzugt 90 bis 180 nm.

### Schritt b)

Die Agglomerierung der feinteiligen, zuvor beschriebenen Polymerdispersionen P zu grobteiligen Polymerdispersionen G erfolgt nach üblichen, dem Fachmann bekannten Verfahren als Druckhomo- oder Druckcoagglomeration. Unter Druckcoagglomeration versteht man zum einen den gleichzeitigen Einsatz von Druck- und weiteren Verfahrensmaßnahmen, wie z. B. das Gefrieren oder den Zusatz chemischer Agglomerierungsmittel, zur Erzielung der Agglomeration der Polymerdispersionsteilchen. Zum anderen versteht man unter Druckcoagglomeration auch das Mischen von mindestens zwei verschiedenen Dispersionen und deren gemeinsame Agglomeration.

Das erfindungsgemäße Verfahren erfolgt bevorzugt als Druckhomoagglomeration. Dazu wird z. B. die Dispersion P mit hohem Druck durch ein Ventil oder eine Drossel gepresst, wobei die Polymerdispersionsteilchen agglomerieren. Die dabei auftretenden Drücke liegen in einem Bereich von etwa 100 bis 450 bar. Weiterhin sind zur Druckagglomeration allgemein bekannte Verfahren und Apparaturen geeignet, die ein Einwirken von Scherkräften ermöglichen. Dazu zählen z. B. Inline-Mischer und Rührer.

Wie erläutert wurde überraschenderweise gefunden, dass die mittlere Teilchengröße und die Teilchengrößenverteilung der agglomerierten Dispersionen G die Eigenschaften der daraus in den Folgeschritten c) und d) hergestellten Polymerdispersionsschäume L im wesentlichen beeinflussen. Das gilt im Allgemeinen sowohl für die Morphologie als auch für bestimmte mechanische Eigenschaften der Schäume und daraus hergestellter Vulkanisate, wie z. B. deren Härte und Reißeigenschaften.

Vorteilhafterweise lassen sich nach dem erfindungsgemäßen Verfahren aus einer Ausgangsdispersion P mit bestimmten konstanten Eigenschaften Polymerdispersionsschäume mit unterschiedlichen Produkteigenschaften von guter Qualität herstellen. Dabei muss bei der Herstellung der grobteiligen Polymerisatdispersionen G für diese Schäume L mit unterschiedlichen Eigenschaften jeweils nur ein (einziger) Verfahrensparameter, ausgewählt unter:
I) dem Feststoffgehalt von P,
II) der Agglomerationstemperatur in Schritt b),
III) dem Agglomerationsdruck in Schritt b),
IV) dem Gehalt an Comonomer B in der Mischung M,
V) der Konzentration des Emulgators in P,
VI) dem Durchsatz bei der Agglomeration,
eingestellt werden.
I) Der Feststoffgehalt der feinteiligen Polymerdispersion P liegt im Allgemeinen in einem Bereich von etwa 25 bis 55 Gew.-%, bevorzugt 30 bis 55 Gew.-%, und kann, wie im folgenden beschrieben, in Abhängigkeit von den gewünschten Eigenschaften der grobteiligen Polymerdispersion G und der resultierenden Polymerdispersionsschäume L variiert werden.
II) Die Agglomerationstemperatur liegt im Allgemeinen in einem Bereich von etwa 0 bis 45 °C, bevorzugt 5 bis 40 °C, und kann, wie im folgenden beschrieben, ebenfalls in Abhängigkeit von den gewünschten Eigenschaften der grobteiligen Polymerdispersionen G und der resultierenden Polymerdispersionsschäume L variiert werden.
III) Der Agglomerationsdruck liegt im Allgemeinen in einem Bereich von etwa 100 bis 450 bar, wie 150 bis 400 bar, und kann z. B. 175 bis 325 bar betragen.
IV) Der Gehalt des Comonomers B in der Mischung M beträgt im Allgemeinen etwa 1 bis 55 Gew.-%, bevorzugt etwa 10 bis 50 Gew.-%, und kann, wie im folgenden beschrieben, ebenfalls in Abhängigkeit von den gewünschten Eigenschaften der grobteiligen Polymerdispersionen G und der resultierenden Polymerdispersionsschäume L variiert werden.
V) Die Konzentration des Emulgators in der zu agglomerierenden feinteiligen Polymerdispersion P beträgt, wie zuvor beschrieben, etwa 1 bis 10 Gew.-%, bezogen auf die Menge an zu polymerisierenden Monomeren, wobei die Oberflächenspannung höchstens 70 mM/m beträgt. Durch den Agglomerationsprozess verringert sich die Gesamtoberfläche der Polymerdispersionsteilchen, die Seifenbedeckung der Polymerdispersionsteilchen nimmt zu und die Oberflächenspannung im Allgemeinen ab. Die Oberflächenspannung der agglomerierten, grobteiligen Polymerdispersionen G liegt in einem Bereich von etwa 25 bis 45 mN/m, bevorzugt 30 bis 40 mN/m. Gewünschtenfalls kann der Polymerdispersion beim Agglomerieren zusätzlich Emulgator zugesetzt werden.
VI) Der Durchsatz bei der Agglomeration hängt vom verwendeten Pumpentyp ab und kann im Allgemeinen ohne weiteres 9 000 l/h betragen.

Die Teilchengrößenverteilung der grobteiligen Polymerdispersion G ist im Allgemeinen relativ breit. Sie kann zwischen 40 und 2 500 nm liegen.

Das Gewichtsmittel der Teilchengröße der grobteiligen Polymerdispersion G, ermittelt mittels analytischer Ultrazentrifuge, liegt, unabhängig vom Qualitätsprofil des daraus hergestellten Polymerdispersionsschaums, für den d₅₀-Wert in einem Bereich von etwa 50 bis 1 000 nm, bevorzugt 80 bis 800 nm. Der d₉₀-Wert liegt in einem Bereich von etwa 350 bis 2 600 nm, bevorzugt 450 bis 2 500 nm.

Nach einer bevorzugten Ausführungsform des erfindungsgemäßen Verfahrens werden grobteilige Polymerdispersionen G hergestellt, die als Zwischenprodukte für Polymerdispersionsschäume L dienen, deren Eigenschaften auf eine Verwendung als Formschäume zielen.

In diesem Fall werden zur Agglomerierung feinteilige Polymerdispersionen P mit einem Feststoffgehalt von etwa 30 bis 55 Gew.-%, bevorzugt etwa 30 bis 40 Gew.-%, eingesetzt. Die Agglomerierungstemperatur liegt in einem Bereich von etwa 5 bis 40 °C, bevorzugt etwa 15 bis 40 °C. Der Gehalt an Comonomer B in der Mischung M beträgt im Allgemeinen etwa 10 bis 50 Gew.-%, bevorzugt 10 bis 35 Gew.-%.

Der LD-Wert der agglomerierten Polymerdispersionen G für eine Weiterverarbeitung zu Formschäumen liegt im Allgemeinen bei etwa 5 bis 30 %.

Der gewichtsmittlere Teilchendurchmesser der agglomerierten Polymerdispersionen G für die Weiterverarbeitung zu Formschäumen, gemessen als d₅₀-Wert in der analytischen Ultrazentrifuge beträgt im Allgemeinen etwa 80 bis 800 nm. Der gewichtsmittlere Teilchendurchmesser, gemessen als d₉₀-Wert beträgt im Allgemeinen etwa 400 bis 1600 nm.

Nach einer weiteren bevorzugten Ausführung werden grobteilige Polymerdispersionen G hergestellt, die als Zwischenprodukte für Polymerdispersionsschäume L dienen, deren Eigenschaften auf eine Verwendung als Teppichschäume zielen.

Dazu werden dann zur Agglomerierung feinteilige Polymerdispersionen P mit einem Feststoffgehalt von etwa 30 bis 55 Gew.-%, bevorzugt etwa 35 bis 55 Gew.-% eingesetzt. Die Agglomerierungstemperatur liegt dann im Allgemeinen in einem Bereich von etwa 5 bis 35 °C, bevorzugt 5 bis 30 °C. Der Gehalt an Comonomer B in der Mischung M beträgt im Allgemeinen etwa 15 bis 55 Gew.-%, bevorzugt 20 bis 55 Gew.-%.

Der LD-Wert der so erhaltenen agglomerierten Polymerisatdispersionen G für die Weiterverarbeitung zu Teppichschäumen beträgt im Allgemeinen etwa 3 bis 25, bevorzugt etwa 3 bis 15.

Der gewichtsmittlere Teilchendurchmesser der Polymerisatdispersionen G für die Weiterverarbeitung zu Teppichschäumen, gemessen als d₅₀-Wert in der analytischen Ultrazentrifuge beträgt im Allgemeinen etwa 150 bis 1 500 nm.

Der gewichtsmittlere Teilchendurchmesser der Polymerisatdispersionen G für die Weiterverarbeitung zu Teppichschäumen, gemessen als d₉₀-Wert in der analytischen Ultrazentrifuge, beträgt im Allgemeinen etwa 600 bis 2500 nm.

Die durch die Agglomeration erhaltenen, grobteiligen Polymerdispersionen G weisen somit eine auf die gewünschten Eigenschaften des Endproduktes abgestimmte Teilchengrößenverteilung auf.

### Schritt c)

Zur Herstellung von Polymerdispersionsschäumen werden grobteilige Polymerdispersionen G mit einem hohem Feststoffgehalt eingesetzt, der im Allgemeinen mindestens 60 Gew.-%, vorzugsweise 65 Gew.-% und insbesondere mehr als 65 Gew.-% beträgt. Dazu werden die in Schritt b) erhaltenen Dispersionen in üblicher Weise, z. B. durch Dünnschichtverdampfen, aufkonzentriert. Dabei darf jedoch ein für die weitere Verarbeitung noch akzeptables Viskositätsniveau nicht überschritten werden. Die nach dem erfindungsgemäßen Verfahren erhältlichen aufkonzentrierten Dispersionen weisen im Allgemeinen eine Viskosität von etwa 1000 bis 2500 mPa·s, gemessen nach Brookfield, auf. Die Oberflächenspannung liegt in einem Bereich von etwa 25 bis 50 mN/m.

Die hochkonzentrierten Polymerdispersionen können gewünschtenfalls zur Erzielung einer größeren Härte des Polymerdispersionsschaums L vor oder während des Aufkonzentrierens oder vor dem Schäumen mit einer Verstärkerdispersion gemischt werden. Dabei muss die eingesetzte Verstärkerdispersion mit der hochkonzentrierten Polymerdispersion kompatibel sein, d. h., es müssen vergleichbare pH-Werte und miteinander verträgliche Emulgatorsysteme vorliegen.

Die im erfindungsgemäßen Verfahren eingesetzten Verstärkerdispersionen H enthalten mindestens ein ethylenisch ungesättigtes Monomer, ausgewählt unter Vinylaromaten, bevorzugt Styrol, Vinylhalogeniden, bevorzugt Vinylchlorid, nichtaromatischen Kohlenwasserstoffen mit mindestens zwei olefinischen Doppelbindungen, bevorzugt Butadien, und Mischungen davon, einpolymerisiert.

Vorzugsweise sind die Verstärkerdispersionen H ausgewählt unter Styrol-Homopolymerisaten, Styrol/Butadien-Copolymerisaten sowie Polyvinylchlorid-Homopolymerisaten. Werden als Monomere für die Mischung M zur Herstellung der feinteiligen Polymerdispersionen P Butadien und Styrol eingesetzt, und diese Dispersionen nach dem Agglomerieren und Aufkonzentrieren mit einer ebensolchen Dispersion gemischt, so werden sortenreine Produkte erhalten.

Die mittlere Teilchengröße der Verstärkerdispersionen H beträgt im Allgemeinen etwa 25 bis 220 nm, bevorzugt etwa 50 bis 200 nm. Die Teilchengrößenverteilung ist dabei monomodal oder polymodal.

### Schritt d)

Die zuvor beschriebenen hochkonzentrierten Synthesekautschukdispersionen eignen sich gleichermaßen für alle gängigen Verfahren zur Herstellung von Polymerdispersionsschäumen. Solche Verfahren sind dem Fachmann bekannt und umfassen z. B. das mechanische Verschäumen der Polymerdispersionen mit Luft oder anderen Treibgasen und gewünschtenfalls das anschließende Vulkanisieren in der Wärme. Die Polymerdispersion kann zur Schaumherstellung compoundiert werden.

Dazu werden der Kautschukdispersion in der Regel Vernetzungs- oder Vulkanisationsmittel zugesetzt. Derartige Mittel sind dem Fachmann bekannt, z. B. aus E.W. Madge 'Latex Foam Rubber', Maclaren & Sons, 1962 oder W. Hofmann, Rubber Technology Handbook, Carl Hanser Verlag, Munich, Vienna, New York bzw. Oxford University Press. In der Regel wird ein Vernetzungssystem auf Schwefelbasis verwendet, wobei der Schwefelgehalt in der Regel 2 bis 3 Gew.-% (Trockengewicht) beträgt. Beschleuniger, z. B. Dithiocarbamat, Xanthat, Thiazol oder Thiuram können ebenfalls zugesetzt werden. Gewünschtenfalls wird Zinkoxid in Mengen von 1 bis 10 Gew.-% als Aktivator bei der Compoundier- oder Schäumstufe zugesetzt. Gegebenenfalls werden Antioxidantien und Füllstoffe zugesetzt.

Polymerdispersionsschäume L werden üblicherweise dadurch hergestellt, dass eine compoundierte Kautschukdispersion mittels Schlagschaumverfahren in einen fließfähigen Schaum überführt wird, in eine Form gefüllt, gegebenenfalls geliert und anschließend vulkanisiert wird. Schaumgummi gemäß der Erfindung ist somit sowohl nach Formverfahren, z. B. den sogenannten Dunlop- oder Talalay-Verfahren, als auch nach dem Ausbreitverfahren herstellbar. Dabei entsteht beispielsweise ein Formschaum, wenn die geschäumte Dispersion in Formen gegossen, gegebenenfalls geliert und anschließend vulkanisiert wird.

Bevorzugt ist hier das Dunlop-Verfahren. Eine vulkanisationsfähig compoundierte Polymerdispersionsmischung wird zu einem stabilen Schaum, der sogenannten vorgeschäumten Polymerdispersion, von ca. 8 bis 12-fachem Volumen der ursprünglichen Polymerdispersionsmischung aufgeschlagen. Zum Schaum gibt man eine Lösung sensibilisierend wirkender Verbindungen, sogenannte Geliermittel, und füllt ihn in eine verschließbare Form. Je nach der Menge des zugesetzten Sensibilisierungsmittels bleibt der Schaum noch ca. 5 bis 10 Minuten flüssig, bevor er geliert. Er wird noch in der Form durch Hitzebehandlung mit Dampf oder beispielsweise heißem Wasser vulkanisiert. Beim anschließenden Waschen und Trocknen kann eine Schrumpfung eintreten.

Die Verfahrensstufen des Schäumens, Gelierens oder Härtens, Trocknens und Vernetzens sind dem Fachmann ebenso wie die hierzu verwendbaren Mittel bekannt. Werden Geliermittel verwendet, so sind solche des hitzeempfindlichen oder mit Verzögerung arbeitenden Typs geeignet. Typische geeignete derartige Mittel sind wohlbekannt und werden ebenso wie die Verfahren, in denen sie üblicherweise eingesetzt werden, in Madge 'Latex Foam Rubber' beschrieben. In der Regel werden im Dunlop-Verfahren mit Verzögerung arbeitende Gelierungsmittel verwendet, wohingegen hitzeempfindliche Mittel in Ausbreitungsschäumen und Flachwalzwerkstoffen Anwendung finden.

Ein weiterer Gegenstand der Erfindung sind die durch das zuvor beschriebenen Verfahren erhältlichen Polymerdispersionsschäume. Dazu zählen u. a. Formschäume, die durch Schäumen einer dafür geeigneten, wie zuvor beschriebenen grobteiligen Polymerdispersion G als Zwischenprodukt erhältlich sind. Formschäume weisen im Allgemeinen eine Dichte von 60 bis 140 g/l, wie z. B. etwa 90 bis 120 g/l, auf. Ihre Reißkraft beträgt dabei im Allgemeinen mindestens 75 kPa, bevorzugt mindestens 100 kPa. Ihre Reißdehnung beträgt im Allgemeinen mindestens 100 %, bevorzugt mindestens 150 %.

Polymerdispersionsschäume mit den zuvor beschriebenen Eigenschaften eignen sich vorzugsweise als Formschäume zur Herstellung von Polymerdispersionsmatratzen, Möbelpolstern und sonstigen Schaumformteilen.

Zu den erfindungsgemäßen Polymerdispersionsschäumen zählen auch die durch Schäumen einer entsprechend geeigneten grobteiligen Polymerdispersion G als Zwischenstufe erhältlichen Teppichschäume. Diese Schäume weisen im Allgemeinen eine Dichte von etwa 150 bis 290 g/l, wie z. B. 200 bis 230 g/l auf. Ihre Reißkraft beträgt im Allgemeinen mindestens 70 kPa. Die Reißdehnung dieser Schäume beträgt im Allgemeinen mindestens 100 %.

Solche Polymerdispersionsschäume L eignen sich vorzugsweise zur Verwendung für die Herstellung von geschäumten Teppichrücken.

Die Erfindung wird anhand der folgenden nicht einschränkenden Beispiele näher erläutert.

### Beispiele

Die Glasübergangstemperatur Tg wurde mittels DSC (differential scanning calorimetry) bestimmt.

Die Oberflächenspannung (OSP) wurde mittels Ringtensiometer bestimmt.

Der LD-Wert (Lichtdurchlässigkeit) wurde bestimmt an einer 0,01 gew.-%igen Lösung in Wasser gegen reines Lösungsmittel als Referenz.

Die gewichtsmittleren Teilchendurchmesser (d₅₀-, d₉₀-Wert) wurden bestimmt nach W. Mächtle, Makromolekulare Chemie 185, S. 1025 - 1039 (1984) in einer analytischen Ultrazentrifuge (AUZ).

Die scheinbare Viskosität wurde in einem Brookfield-Viskosimeter (LV) bei einer Temperatur von 25 °C und 30 U/min bestimmt, (ISO 1652).

Die Dichte der Polymerdispersionsschäume wurde nach ISO 845 bestimmt.

Die Härte der Polymerdispersionsschäume wurde bestimmt als Eindruckhärte nach ISO 2439A entsprechend 40 % Eindrückung (30 s).

Die Reißkraft und die Reißdehnung wurden bestimmt nach ISO 1798.

Der Schrumpf wurde bestimmt nach ISO 845.

Der Druckverformungsrest wurde bestimmt nach ISO 1856.

### A) Herstellung einer feinteiligen Polymerdispersion

In einem gerührten Polymerisationsdruckgefäß mit einem Innenvolumen von 160 l wurde bei 20 °C eine Lösung aus 0,18 kg K₂SO₄, 0,11 kg Na₂SO₄, 0,007 kg des Na-Salzes der Ethylendiamintetraessigsäure, 0,007 kg Natriumdithionit, 0,17 kg eines Polykondensats aus Naphthalinsulfonsäure und Formaldehyd mit einem zahlenmittleren Molekulargewicht von 5 000 in Form einer 45 gew.-%igen wässrigen Lösung, 7,9 kg Kaliumoleat in Form einer 12,5 gew.-%igen wässrigen Lösung und 9,0 kg Wasser vorgelegt und anschließend wurden 46,8 kg Wasser zugefügt. Daraufhin wurden die nachfolgenden Bestandteile eines Redoxinitiatorsystems zugesetzt: 0,007 kg Natriumthionit, 0,007 kg Natriumformaldehydsulfoxylat, 0,003 kg Fe(II)SO₄·7H₂O, 0,007 kg Na-Salz der Ethylendiamintetraessigsäure, 0,013 kg Natriumphosphat (Na₃PO₄·10H₂O) und 2,5 kg Wasser. Dann wurden 8,4 kg Styrol und 0,03 kg tert.-Dodecylmercaptan eingerührt. Schließlich wurden dem Polymerisationsgefäß 25,1 kg Butadien zugedrückt. Das resultierende Gemisch wurde auf 10 °C gekühlt. Dann wurden 0,05 kg para-Menthanhydroperoxid auf einmal zugesetzt und dadurch die Polymerisation ausgelöst. Unter Aufrechterhaltung der Polymerisationstemperatur von 10 °C wurde bis zu einem, auf die Gesamtmenge der zu polymerisierenden Monomeren bezogenen, Polymerisationsumsatz von 35 Gew.-% weiterpolymerisiert. Dann wurden auf einmal nochmals 1,3 kg Kaliumoleat (als 12,5 gew.-%ige wässrige Lösung) und 0,02 kg para-Menthanhydroperoxid zugesetzt. Danach wurde bis zu einem Polymerisationsumsatz von > 70 und < 90 Gew.-% unter Aufrechterhaltung der 10 °C die Polymerisation fortgeführt. Schließlich wurde die radikalische wässrige Emulsionspolymerisation durch Zusatz von 0,012 kg Diethylhydroxylamin gestoppt. Anschließend wurden die Restmonomeren durch Strippen entfernt.

### B) Druckagglomeration unter Variation des Feststoffgehaltes

Die physikalischen Eigenschaften der zur Druckagglomeration eingesetzten Polymerdispersion aus Beispiel A) sind in Tabelle 1 niedergelegt. Der Feststoffgehalt dieser Dispersion wird durch Aufkonzentrieren mit üblichen Verfahren auf 34,4 Gew.-% (Beispiel B1) bzw. 39,3 Gew.-% (Beispiel B2) eingestellt. Die so erhaltenen Ausgangsdispersionen werden unter den in Tabelle 1 angegebenen Agglomerationsbedingungen einer Druckagglomeration unterzogen (Gerät: Hochdruckpumpe LAB 60-10 TBS der Fa. APV Gaulin GmbH).

Die druckagglomerierten wässrigen Polymerdispersionen wurden mittels eines Dünnschichtverdampfers unter den gleichen Bedingungen aufkonzentriert, wobei grobteilige Polymerdispersionen mit einem Feststoffgehalt von 68,9 Gew.-% (B1) bzw. 72,0 Gew.-% (B2) erhalten wurden. Die Manteltemperatur des Dünnschichtverdampfers variierte von 100 bis 130 °C. Der Druck im Verdampfer variierte von 80 bis 120 mbar. Die zugehörige Polymerdispersionstemperatur war 40 bis 50 °C. Die physikalischen Eigenschaften der agglomerierten, grobteiligen Polymerdispersionen sind ebenfalls in Tabelle 1 wiedergegeben.

100 Gewichtsteile, bezogen auf Festgewicht, der grobteiligen Polymerdispersionen B1 und B2 wurden mit je 23,5 Gewichtsteilen, bezogen auf Festgewicht, einer Verstärkerdispersion gemischt, welche aus Styrol hergestellt wurde und eine annähernd monomodale Teilchengrößenverteilung aufwies. In jeweils 1 540 g der so erhaltenen wässrigen Polymerisatdispersionen wurde nacheinander eingerührt:
- 45 g: Schwefel als 50 gew.-%ige wässrige Suspension,
- 20 g: Zinkethylphenyldithiocarbamat als 50 gew.-%ige wässrige Suspension und
- 15 g: Diphenylguanidin als 50 gew.-%ige wässrige Suspension,
- 20 g: einer 50 gew.-%igen wässrigen Suspension eines üblichen-Radikalfängers auf Basis sterisch gehinderter Phenole
- 60 g: feinteiliges ZnO als 50 gew.-%ige wässrige Suspension.

Das resultierende Gemisch wurde mittels eines Schlagschäumers auf das 8 bis 10-fache seines Volumens aufgeschäumt. In den resultierenden Schaum wurden 120 g Na₂SiF₆ (als 25 gew.-%ige wässrige Suspension) innerhalb von 2 min eingearbeitet. Anschließend wurde die aufgeschlagene Masse in eine Metallform gefüllt (450 mm x 350 mm x 50 mm) und der überschüssige Schaum glatt abgestrichen. Nach erfolgter Gelierung durch sich selbst überlassen (10 min) bei Raumtemperatur wurde in einem mittels 100 °C heißem Wasserdampf beheizten Vulkanisationsofen vulkanisiert (30 min). Danach wurde der resultierende Schaumgummi der Form entnommen und getrocknet und gemäß der DIN EN 597 (Entwurf vom Februar 1992, Teil 1 und Teil 2) konditioniert. Die physikalischen Eigenschaften des resultierenden Formschaums B1 und des Teppichschaums B2 sind ebenfalls in Tabelle 1 wiedergegeben.

**Tabelle 1**

| | physikalische Eigenschaften | B1 Formschaum | B2 Teppichschaum |
|---|---|---|---|
| feinteilige Ausgangsdispersion | Tg (DSC) °C | -52,6 | -52,6 |
| | OSP mN/m | 64 | 64 |
| | LD % | 91 | 91 |
| | d₅₀ (AUZ) nm | 51 | 51 |
| | d₉₀ (AUZ) nm | 94 | 94 |
| Agglomerationsbedingungen | p bar | 200 | 200 |
| | T °C | 21 | 21 |
| | Durchsatz l/h | 60 | 60 |
| | Feststoffgehalt % | 34,4 | 39,3 |
| grobteilige Polymerdispersion | Feststoffgehalt % | 68,9 | 72 |
| | Viskosität mPa.s | 1560 | 1660 |
| | OSP mN/m | 33 | 35 |
| | LD % | 12 | 6 |
| | d₅₀ (AUZ) nm | 305 | 580 |
| | d₉₀ (AUZ) nm | 830 | 1171 |
| Polymerdispersionsschaum aus grobteiliger Dispersion und Verstärker | Dichte g/l | 107 | 110 |
| | Härte N | 369 | 472 |
| | Reißkraft kPa | 105 | 82 |
| | Reißdehnung % | 225 | 110 |
| | Schrumpf % | 19 | 24 |
| | Druckverformungsrest % | 13 | 21 |

### C) Druckagglomeration unter Variation der Temperatur

Die physikalischen Eigenschaften der zur Druckagglomeration eingesetzten Polymerdispersion aus Beispiel A) sind in Tabelle 2 niedergelegt. Der Feststoffgehalt beider Dispersionen C1 und C2 beträgt 37,9 Gew.-%. Die so erhaltenen Dispersionen wurden unter den in Tabelle 2 angegebenen Agglomerationsbedingungen einer Druckagglomeration unterzogen (Gerät wie in Beispiel B).

Die druckagglomerierten, wässrigen Polymerdispersionen wurden analog zu Beispiel B mittels eines Dünnschichtverdampfers auf einen Feststoffgehalt von 71,9 Gew.-% (Beispiel C1) bzw. 74,3 Gew.-% (Beispiel C2) aufkonzentriert.

Die physikalischen Eigenschaften der agglomerierten, grobteiligen Polymerdispersionen sind ebenfalls in Tabelle 2 wiedergegeben.

Die grobteiligen Polymerdispersionen wurden analog zu Beispiel B mit einem Verstärker gemischt und zu Polymerdispersionsschäumen verarbeitet. Die physikalischen Eigenschaften des resultierenden Formschaums C1 und des Teppichschaums C2 sind ebenfalls in der Tabelle 2 wiedergegeben.

**Tabelle 2**

| | physikalische genschaften | Ei | C1 Formschaum | C2 Teppichschaum |
|---|---|---|---|---|
| feinteilige Ausgangsdispersion | Tg (DSC) | °C | -53,0 | -53,0 |
| | OSP | mN/m | 64 | 64 |
| | LD | % | 89 | 89 |
| | d₅₀ (AUZ) | nm | 51 | 51 |
| | d₉₀ (AUZ) | nm | 115 | 115 |
| Agglomerationsbedingungen | p | bar | 225 | 225 |
| | T | °C | 24,5 | 16,5 |
| | Durchsatz | l/h | 60 | 60 |
| | Feststoffgehalt | % | 37,9 | 37,9 |
| grobteilige Polymerdispersion | Feststoffgehalt | % | 71,9 | 74,3 |
| | Viskosität | mPa.s | 7700 | 6300 |
| | OSP | mN/m | 37 | 34 |
| | LD | % | 3 | 3 |
| | d₅₀ (AUZ) | nm | 610 | 731 |
| | d₉₀ (AUZ) | nm | 1164 | 1591 |
| Polymerdispersionsschaum aus grobteiliger Dispersion und Verstärker | Dichte | g/l | 110 | 112 |
| | Härte | N | 391 | 473 |
| | Reißkraft | kPa | 83 | 74 |
| | Reißdehnung | % | 125 | 100 |
| | Schrumpf | % | 25 | 25 |
| | Druckverformungsrest | % | 15 | 17 |

Wie die erfindungsgemäßen Beispiele B und C belegen, kann man durch Variation eines Parameters bei der Druckagglomeration (Feststoffgehalt der feinteiligen Dispersion bzw. Agglomerationstemperatur) aus einer Ausgangsdispersion A grobteilige Dispersionen mit unterschiedlichen mittleren Teilchengrößen und Teilchengrößenverteilung erhalten. Dies belegen die d₅₀- und d₉₀-Werte der grobteiligen Polymerdispersionen gemäß Tabellen 1 und 2. Diese grobteiligen Polymerdispersionen lassen sich dann unter analogen Bedingungen zu Polymerdispersionsschäumen mit unterschiedlichen Eigenschaften, entsprechend den jeweiligen Anforderungen an einen Formschaum bzw. einen Teppichschaum, weiterverarbeiten.

## Patentansprüche

1. Verfahren zur Herstellung von Polymerdispersionsschäumen L, wobei man:
a) eine Mischung M, die mindestens ein konjugiertes Dienmonomer A und mindestens ein ethylenisch ungesättigtes Comonomer B umfasst, durch radikalische wässrige Emulsionspolymerisation in Gegenwart wenigstens eines Emulgators zu einer feinteiligen Polymerdispersion P polymerisiert,
b) die feinteilige Polymerdispersion P zu einer grobteiligen Polymerdispersion G druckagglomeriert,
c) die Polymerdispersion G gegebenenfalls aufkonzentriert und gegebenenfalls mit einer Verstärkerdispersion H mischt,
d) die Dispersion aus c) zu einem Polymerdispersionsschaum L schäumt,
dadurch gekennzeichnet, dass die mittlere Teilchengröße und die Teilchengrößenverteilung von G durch Variation eines Parameters, ausgewählt unter:
I) dem Feststoffgehalt von P,
II) der Agglomerationstemperatur in Schritt b),
III) dem Agglomerationsdruck in Schritt b),
IV) dem Gehalt an Comonomer B in der Mischung M,
V) der Konzentration des Emulgators in P,
VI) dem Durchsatz bei der Agglomeration,
eingestellt wird.

2. Verfahren nach Anspruch 1, dadurch gekennzeichnet, dass man eine Polymerdispersion P mit annähernd monomodaler Teilchengrößenverteilung einsetzt.

3. Verfahren nach einem der vorhergehenden Ansprüche, dadurch gekennzeichnet, dass das Dienmonomer A ausgewählt ist unter Butadien, Isopren, Chloropren und Mischungen davon.

4. Verfahren nach einem der vorhergehenden Ansprüche, dadurch gekennzeichnet, dass das ethylenisch ungesättigte Comonomer B ausgewählt ist unter Vinylaromaten, Estern α,β-ethylenisch ungesättigter C₃-C₆-Mono- und -Dicarbonsäuren, α,β-ethylenisch ungesättigter Nitrilen, Estern von Vinylalkohol mit C₁-C₂₀-Monocarbonsäuren, α,β-ethylenisch ungesättigten C₃-C₆-Mono- und -Dicarbonsäuren und deren Amiden, N-Alkylolamiden von α,β-ungesättigten C₃-C₁₀-Carbonsäuren und deren Estern mit C₁-C₄-Alkoholen, Hydroxyalkylacrylaten, Hydroxyalkylmethacrylaten und Mischungen davon.

5. Verfahren nach einem der vorhergehenden Ansprüche, dadurch gekennzeichnet, dass die Menge des Dienmonomers A 45 bis 99 Gew.-%, bevorzugt 50 bis 90 Gew.-%, insbesondere 55 bis 85 Gew.-%, bezogen auf die Menge der Monomere von M, beträgt.

6. Verfahren nach einem der vorhergehenden Ansprüche, dadurch gekennzeichnet, dass man zur Agglomerierung b) eine Polymerdispersion P mit einem Feststoffgehalt von 30 bis 55 Gew.-%, bevorzugt 32 bis 45 Gew.-%, einsetzt.

7. Verfahren nach einem der vorhergehenden Ansprüche, dadurch gekennzeichnet, dass die Agglomerationstemperatur in Schritt b) zur Herstellung von Polymerdispersionen G für die Weiterverarbeitung zu Formschäumen 5 bis 40 °C, bevorzugt 15 bis 40 °C, und für die Weiterverarbeitung zu Teppichschäumen 5 bis 35 °C, bevorzugt 5 bis 30 °C, beträgt.

8. Verfahren nach einem der vorhergehenden Ansprüche, dadurch gekennzeichnet, dass der Gehalt an Comonomer B in der Mischung M zur Herstellung von Polymerdispersionen G für die Weiterverarbeitung zu Formschäumen 10 bis 40 Gew.-%, bevorzugt 10 bis 35 Gew.-%, und für die Weiterverarbeitung zu Teppichschäumen 15 bis 55 Gew.-%, bevorzugt 20 bis 55 Gew.-%, beträgt.

9. Verfahren nach einem der vorhergehenden Ansprüche, dadurch gekennzeichnet, dass der Feststoffgehalt der Polymerdispersion P für die Weiterverarbeitung zu Formschäumen 30 bis 55 Gew.-%, bevorzugt 30 bis 40 Gew.-%, und für die Weiterverarbeitung zu Teppichschäumen 30 bis 55 Gew.-%, bevorzugt 35 bis 55 Gew.-%, beträgt.

10. Polymerdispersionen G, gegebenenfalls aufkonzentriert oder mit einer Harzdispersion H gemischt, erhältlich durch ein Verfahren nach einem der vorhergehenden Ansprüche.

11. Verwendung von Polymerdispersionen G nach Anspruch 10 als Zwischenprodukte für die Weiterverarbeitung zu Polymerdispersionsschäumen.

12. Polymerdispersionsschäume L, erhältlich durch ein Verfahren nach einem der Ansprüche 1 bis 9.

13. Verwendung der Polymerdispersionsschäume nach Anspruch 12 als Formschäume und Teppichschäume.
